# EUROPEAN PATENT APPLICATION

(11) **EP 2 405 414 A1**
(43) Date of publication of application: **11.01.2012**
(21) Application number: 09840980.8
(22) Date of filing: 02.03.2009
(51) Int. Cl.: G08C 17/02

(54) **DEVICE FOR ELIMINATING STANDBY POWER DISSIPATION OF AN ELECTRIC APPLIANCE POWERED OFF AUTOMATICALLY BY ITS SYSTEM**

(71) Applicant: Huo, Weimin, Shenzhen, Guangdong 518038 (CN)
(72) Inventor: SUI, Haiyan, Guangdong 518038 (CN)
(74) Representative: Plucker, Guy
(86) International application number: PCT/CN2009/070601
(87) International publication number: WO 2010/099646

(57) **Abstract**

A device for eliminating standby power consumption of an electronic appliance with a system capable of automatic power-off is provided, which includes: a power-on signal wireless transmitting unit; a control unit; a wireless signal receiving unit, connected to the control unit; a controlled electronic appliance power supply switch unit, connected to the control unit, the power supply unit, the external power source and a power input end of a controlled electronic appliance; a power supply unit of the device, connected to the control unit, the controlled electronic appliance power supply switch unit and the external power source. In the device for eliminating standby power consumption of an electronic appliance with a system capable of automatic power-off, a flexible button capable of being adhered to a surface of a switch button of a different electronic appliance is used, so the electronic appliance can be powered on by pressing the button only once like a normal operation. Meanwhile, a standby current value of the controlled electronic appliance can be detected and memorized, thereby avoiding that the standby electronic appliance or normally working electronic appliance might be unable to be turned off due to different standby power consumption of different electronic appliances.

## Description

### BACKGROUND OF THE INVENTION

### Field of Invention

The present invention relates to an electronic appliance with a system capable of automatic power-off, and more particularly to a device for eliminating standby power consumption of an electronic appliance with a system capable of automatic power-off.

### Related Art

An electronic appliance with a system capable of automatic power-off refers to an electronic appliance capable of being turned off by a user through an operating system without having to turn off the electronic appliance manually or through remote control, and when the electronic appliance is powered on next time, the user needs to press a switch button to turn on the electronic appliance. When this type of electronic appliance is powered off, the power source is not completely turned off. At this time, the power source power consumption is standby power consumption of the electronic appliance. By eliminating the standby power consumption of this type of electronic appliance, energy resources may be saved, the environment may be protected, and the safety of the electronic appliance may be improved. In an existing device for eliminating standby power consumption of the electronic appliance, a power source input current of the electronic appliance is monitored. When the power source input current decreases below a preset current value, it is regarded that the electronic appliance is already powered off and power supply to the electronic appliance is turned off, so as to eliminate standby power consumption. The device has a turn-on button connected to a body thereof in a wired manner. When a user needs to power on the electronic appliance, the user first presses this button to turn on power supply to the electronic appliance, and then press a switch button of the electronic appliance to turn on the electronic appliance. The defect lies in that different electronic appliances have different standby power consumption and work power consumption, at a preset standby power consumption threshold value, the standby electronic appliance or normally working electronic appliance might be unable to be turned off. When turning on the electronic appliance, the user needs to first press the turn-on button of the device to turn on power supply to the electronic appliance, and then also needs to press the switch button of the electronic appliance to turn on the electronic appliance, such that the operation is complicated and use is convenient.

### SUMMARY OF THE INVENTION

The present invention is to solve the above problems, and provides a device for eliminating standby power consumption of an electronic appliance with a system capable of automatic power-off, which uses a flexible button which can be adhered to a surface of a switch button of a different electronic appliance so that the electronic appliance can be powered on by pressing the button only once like a normal operation, and meanwhile is capable of detecting and memorizing a standby current value of a controlled electronic appliance thus avoiding that a standby electronic appliance or a normally working electronic appliance might be unable to be turned off due to different standby power consumption of different electronic appliances.

To achieve the above objectives, the present invention provides a device for eliminating standby power consumption of an electronic appliance with a system capable of automatic power-off, which includes:
a power-on signal wireless transmitting unit 20;
a control unit 10;
a wireless signal receiving unit 30, electrically connected to the control unit 10; and
a controlled electronic appliance power supply switch unit 40, electrically connected to the control unit 10, a power supply unit 50 and a power input end of a controlled electronic appliance 71.

In the device for eliminating standby power consumption of an electronic appliance with a system capable of automatic power-off, the power-on signal wireless transmitting unit 20 includes a power-on signal wireless transmitting unit housing 25 and a flexible button 21. A wireless signal encoding and transmitting circuit 22, a wireless signal transmit antenna 23 and a transmitting unit power source 24 are disposed in the power-on signal wireless transmitting unit housing 25. The wireless signal encoding and transmitting circuit 22 is electrically connected to the wireless signal transmit antenna 23 and the power source 24.

In the device for eliminating standby power consumption of an electronic appliance with a system capable of automatic power-off, the control unit 10 includes a control chip 11, a memory 12 used for storing a standby status current value of the controlled electronic appliance to be written and used by the control chip 11 and capable of saving the standby status current value for a long time after power cutoff, a controlled electronic appliance power consumption current sensor 13 used for detecting a power consumption current of a controlled electronic appliance, a setting and manual power-on button 14 and a setting and work status indicator lamp 15. The memory 12, the controlled electronic appliance power consumption current sensor 13, the setting and manual power-on button 14 and the setting and work status indicator lamp 15 are all electrically connected to the control chip 11. The controlled electronic appliance power consumption current sensor 13 is further electrically connected to the controlled electronic appliance power supply switch unit 40.

In the device for eliminating standby power consumption of an electronic appliance with a system capable of automatic power-off, the wireless signal receiving unit 30 includes a wireless signal receiving antenna 31, a wireless signal amplification and detection circuit 32 and a wireless signal decoding circuit 33. The wireless signal receiving antenna 31 is electrically connected to the wireless signal amplification and detection circuit 32. The wireless signal amplification and detection circuit 32 is electrically connected to the wireless signal decoding circuit 33. The wireless signal decoding circuit 33 is electrically connected to the control chip 11 of the control unit 10 and transfers the received wireless power-on signal to the control chip 11.

In the device for eliminating standby power consumption of an electronic appliance with a system capable of automatic power-off, the controlled electronic appliance power supply switch unit 40 includes a controlled electronic appliance power supply switch 41 and a power socket for supplying power to a controlled electronic appliance 42. The controlled electronic appliance power supply switch unit 40 is electrically connected to the control unit 10 and the power supply unit 50, and is electrically connected to the power input end 73 of the controlled electronic appliance 71 through the power socket for supplying power to a controlled electronic appliance 42 connected thereto.

In the device for eliminating standby power consumption of an electronic appliance with a system capable of automatic power-off, the power supply unit 50 performs voltage drop, rectification, filtering and voltage stabilization processing on the external power source to provide direct current power supply to all units in the device. The power supply unit 50 includes a direct current power supply circuit 51 and a power plug 52 electrically connected to the external power source 72. The power supply unit 50 is electrically connected to the control unit 10 and the controlled electronic appliance power supply switch unit 40, and is electrically connected to the external power source 72 through the power plug 52 electrically connected thereto.

In the device for eliminating standby power consumption of an electronic appliance with a system capable of automatic power-off, the flexible button 21 is a joint structure capable of being adhered or clamped to a surface of a switch button of the controlled electronic appliance 71.

In the device for eliminating standby power consumption of an electronic appliance with a system capable of automatic power-off, the controlled electronic appliance power consumption current sensor 13 may be an alternating current mutual inductor 13A or a resistor 13B serially connected in the power supply circuit of the controlled electronic appliance.

In the device for eliminating standby power consumption of an electronic appliance with a system capable of automatic power-off, the power supply switch 41 may be a relay switch circuit 411 or a silicon controlled switch circuit 412 controlled by the control unit 10.

The contribution of the present invention lies in that the present invention effectively overcomes the defects in a conventional device for eliminating standby power consumption of an electronic appliance with a system capable of automatic power-off A wireless signal transmitter having a flexible button capable of being adhered to a surface of a switch of a different electronic appliance is used. When a user turns on the electronic appliance, the user continuously presses the switch button of the electronic appliance until the electronic appliance is powered on. Meanwhile, the flexible button adhered to the surface of the button is also pressed, so the wireless signal transmitter connected to the flexible button sends a power-on signal of the device. Upon receiving the power-on signal, the device turns on the power supply to the controlled electronic appliance. As the switch button of the controlled electronic appliance is continuously pressed, the controlled electronic appliance is turned on upon acquiring the power supply. Therefore, the user does not need to press the switch twice during power-on, so the operation is simplified. During initial installation, a standby current value of the controlled electronic appliance may be detected and memorized, and during normal use it is judged according to this current value whether the controlled electronic appliance enters a standby status or not, thereby avoiding that the standby electronic appliance or normally working electronic appliance might be unable to be turned off due to different standby power consumption and work power consumption of various electronic appliances and the preset standby power consumption threshold value.

### BRIEF DESCRIPTION OF THE DRAWINGS

The present invention will become more fully understood from the detailed description given herein below for illustration only, and thus are not limitative of the present invention, and wherein:
FIG. 1 is a principle block diagram according to the present invention;
FIG. 2 is a principle block diagram of a control unit, a controlled electronic appliance power supply switch unit and a power supply unit according to the present invention;
FIG. 3 is a principle block diagram of a wireless signal receiving unit according to the present invention;

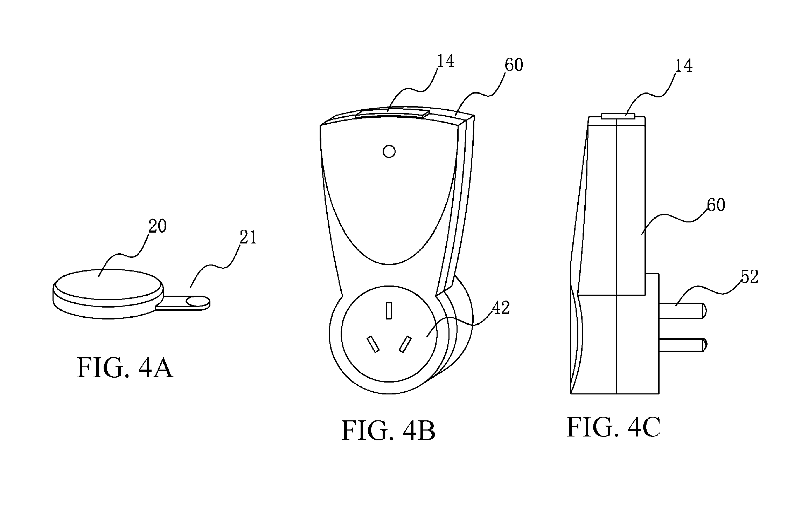

FIG. 4A is a 3D schematic structural view of a power-on signal wireless transmitting unit;
FIG. 4B is a 3D schematic structural view of a control switch portion according to the present invention;
FIG. 4C is a 3D schematic structural view of the control switch portion from different angles according to the present invention;
FIG. 5 is a schematic view of a use method according to the present invention;
FIG. 6A is a schematic composition view of a flexible button according to the present invention;
FIG. 6B is a schematic view of a flexible button adhered to surfaces of different switches;
FIG. 7A is a circuit principle diagram when a controlled electronic appliance power supply switch unit is a relay switch circuit according to the present invention;
FIG. 7B is a circuit principle diagram when a controlled electronic appliance power supply switch unit is a silicon controlled switch circuit according to the present invention;
FIG. 8A is a circuit principle diagram when a controlled electronic appliance power consumption current sensor of a control unit is an alternating current mutual inductor according to the present invention; and
FIG. 8B is a circuit principle diagram when a controlled electronic appliance power consumption current sensor of a control unit is a resistor serially connected in a power supply circuit of a controlled electronic appliance according to the present invention.

### DETAILED DESCRIPTION OF THE INVENTION

The device for eliminating standby power consumption of an electronic appliance with a system capable of automatic power-off in present invention is used for eliminating standby power consumption of an electronic appliance such as a computer. The electronic appliance with a system capable of automatic power-off refers to an electronic appliance such as a computer that can be turned off by a user through an operating system. The user does not need to turn off the electronic appliance manually or through remote control. When the electronic appliance is powered on next time, the user needs to turn on the electronic appliance by pressing a switch button. When this type of electronic appliance is powered off, the power source is not completely turned off. At this time, the power source power consumption is the standby power consumption of the electronic appliance. The device for eliminating standby power consumption of the electronic appliance may save energy resources and protect the environment.

The control switch portion 60 of the device includes a control unit 10, a wireless signal receiving unit 30, a control electronic appliance power supply switch unit 40 and a power supply unit 50. The power-on signal wireless transmitting unit 20 and the control switch portion 60 of the device are connected in a wireless manner.

The use of the device includes two processes: initial installation and normal use.

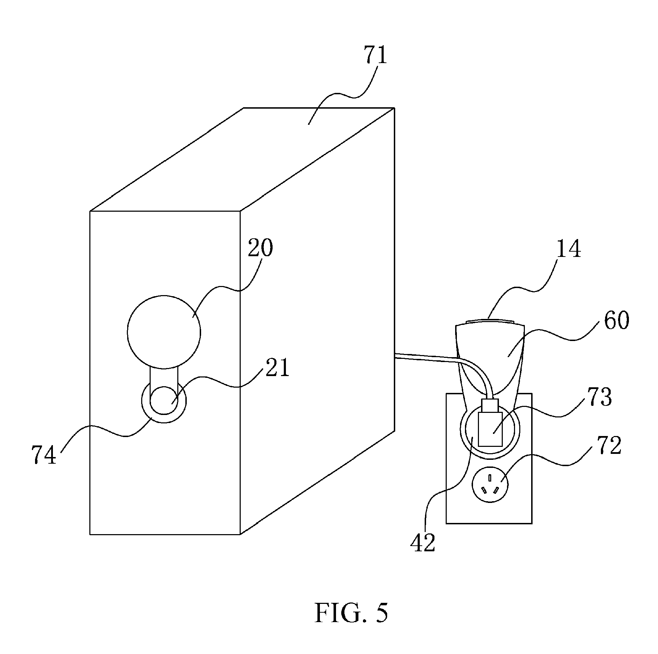

During the initial installation, as shown in FIG. 5, a flexible button 21 of the power-on signal wireless transmitting unit 20 capable of being adhered to different surfaces is adhered on the surface of the switch button 74 of the controlled electronic appliance 71. The power plug 52 of the control switch portion 60 of the device is plugged on the external power source socket 72. A power input end (power plug) 73 of the controlled electronic appliance 71 is plugged on the power socket for supplying power to a controlled electronic appliance 42 of the device. After the above installation is finished, the setting and work status indicator lamp 15 becomes light red indicating that a power source is turned on. The setting and manual power-on button 14 is pressed and held for several seconds till the setting and work status indicator lamp 15 becomes light blue indicating that the device enters a setting status. At this time, the power-off is performed through the operating system of the controlled electronic appliance. After the electronic appliance is powered off for a few minutes, the controlled electronic appliance power-on/off button 74 is pressed to power on the electronic appliance again. After the electronic appliance is powered on, when the input current of the controlled electronic appliance becomes stable, the setting status is ended. The setting and work status indicator lamp 15 becomes light red. In the setting process, the controlled electronic appliance power consumption current sensor 13 transfers an input current value of the controlled electronic appliance 71 to the control chip 11. The control chip 11 saves an input current value when the controlled electronic appliance 71 is in a stable power-off status as a standby status current value in the memory 12 for storage.

During normal use, when the controlled electronic appliance 71 is in a power-on status, the controlled electronic appliance 71 is powered off through an operating system. The controlled electronic appliance power consumption current sensor 13 transfers an input current value of the controlled electronic appliance to the control chip 11. The control chip 11 compares the input current value of the received controlled electronic appliance with the standby status current value stored in the memory 12. When the input current value of the controlled electronic appliance becomes stable within a standby status current value range, it is regarded that the controlled electronic appliance 71 already enters a standby status. The controlled electronic appliance power supply switch unit 40 is controlled to turn off the power supply of the controlled electronic appliance 71. When the controlled electronic appliance 71 is in a power-on status, while the controlled electronic appliance switch button 74 is pressed to power off the electronic appliance, the flexible button 21 adhered to the surface of the switch button is pressed. The power-on signal wireless transmitting unit 20 transmits a wireless power-on signal. The control chip 11 ignores the received wireless power-on signal and waits until the input current value of the controlled electronic appliance transferred from the controlled electronic appliance power consumption current sensor 13 satisfies the standby status, so the control chip 11 starts to control the controlled electronic appliance power supply switch unit 40 to turn off the power supply of the controlled electronic appliance 71, thereby avoiding that the power source is turned off due to actions by mistake. When the controlled electronic appliance 71 is in a power-on status, the action of pressing the setting and manual power-on button 14 is ignored by the control chip 11 to avoid that the power source is turned off due to actions by mistake.

When the controlled electronic appliance 71 is in a power-off status, the controlled electronic appliance switch button 74 is pressed to power on the controlled electronic appliance 71. The switch button 74 needs to be continuously pressed until the controlled electronic appliance is powered on, and the flexible button 21 adhered to the surface of the switch button surface is pressed at the same time. The power-on signal wireless transmitting unit 20 transmits a wireless power-on signal. Upon receiving the wireless power-on signal, the control chip 11 controls the controlled electronic appliance power supply switch unit 40 to turn on the power supply of the controlled electronic appliance 71. After acquiring the power supply, the controlled electronic appliance 71 is powered on as the switch button 74 is continuously pressed. When the controlled electronic appliance 71 is in a power-off status, the setting and manual switch button 14 is pressed. The control chip 11 controls the controlled electronic appliance power supply switch unit 40 to turn on the power supply to the controlled electronic appliance 71 and waits for the user to power on the controlled electronic appliance 71 by pressing the controlled electronic appliance switch button 74. After a certain time is waited, if it is not detected that the controlled electronic appliance 71 is powered on, the control chip 11 controls the controlled electronic appliance power supply switch unit 40 to turn off the power supply to the controlled electronic appliance 71. Therefore, the user can manually power on the controlled electronic appliance 71 when the signal wireless transmitting unit 20 is ineffective or a battery 24 is out of power. Meanwhile, it is avoided that the power source is turned on due to actions by mistake.

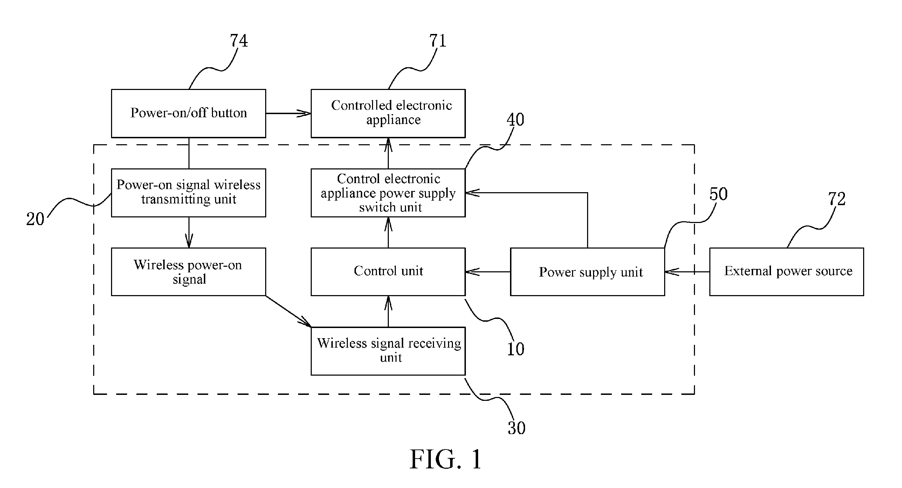

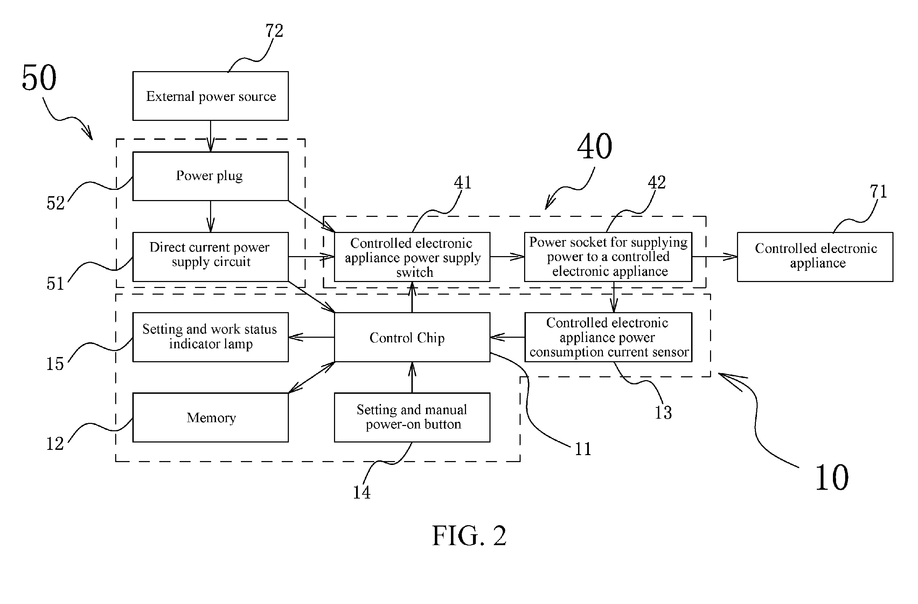

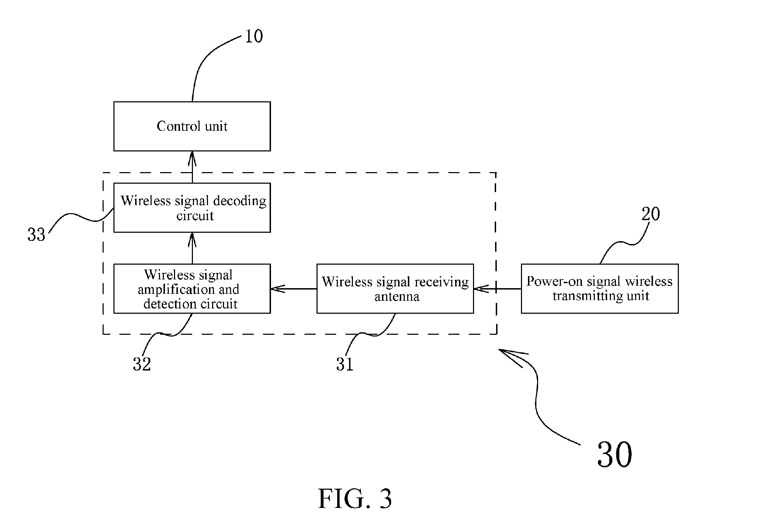

As shown in FIG. 1 to FIG. 3, the device for eliminating standby power consumption of an electronic appliance with a system capable of automatic power-off of the present invention includes a power-on signal wireless transmitting unit 20, a control unit 10, a wireless signal receiving unit 30, a controlled electronic appliance power supply switch unit 40 and a power supply unit 50 of the device.

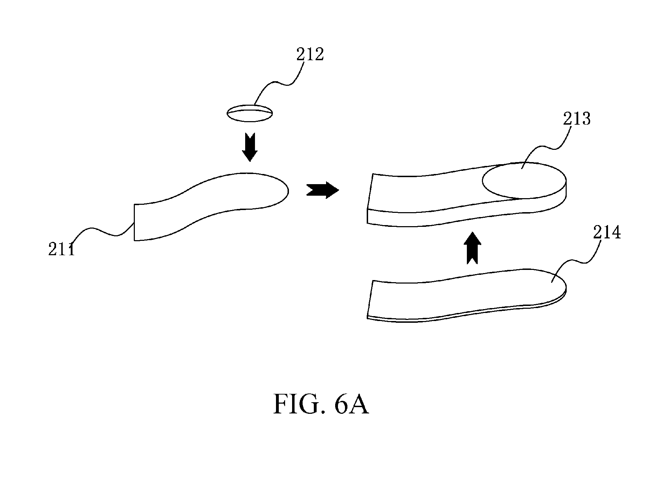

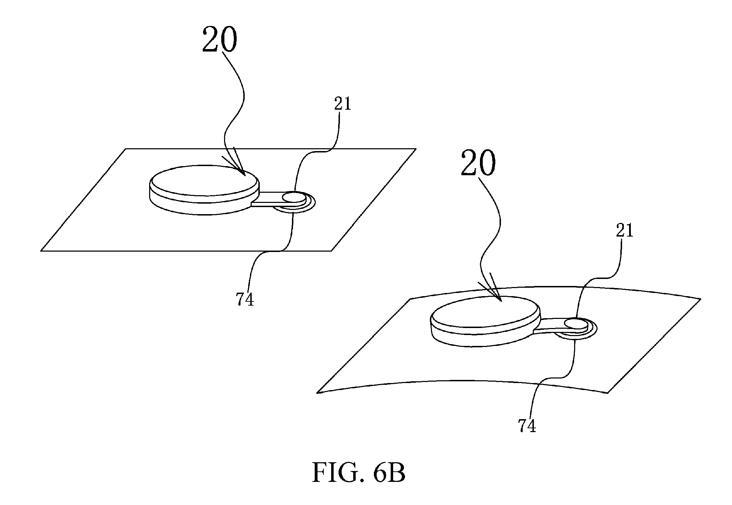

The power-on signal wireless transmitting unit 20 includes a flexible button 21 capable of being adhered to different surfaces, a wireless signal encoding and transmitting circuit 22, a wireless signal transmit antenna 23 and a battery 24. The flexible button 21 capable of being adhered to different surfaces may be formed of a bendable flexible circuit board 211, a film button 212 fixed on the flexible circuit board 21, a flexible protection cover 213 placed at the periphery of the flexible circuit board 211 and the film button 212 and an adhesive layer 214 placed at a bottom of the protection cover (referring to FIG. 6A and FIG. 6B). The flexible circuit board 211, the film button 212, the flexible protection cover 213 and the adhesive layer 214 are all made of bendable flexible material, which can be adhered to surfaces having different shapes by using the adhesive layer 214. The flexible circuit board 211, the film button 212, the flexible protection cover 213 and the adhesive layer 214 may all adopt conventional components. The flexible button 21 is adhered to a surface of the controlled electronic appliance power-on/off button and is connected to the wireless signal encoding and transmitting circuit 22. The wireless signal encoding and transmitting circuit 22 may adopt a conventional wireless signal encoding and transmitting circuit, and the components may all adopt conventional components. When the flexible button 21 connected to the wireless signal encoding and transmitting circuit 22 is pressed, the wireless signal encoding and transmitting circuit 22 transmits a wireless power-on signal to the control switch portion 60 through the connected wireless signal transmit antenna 23. The wireless signal transmit antenna 23 is connected to the wireless signal encoding and transmitting circuit 22 and is used for transmitting a wireless power-on signal, which may be an external antenna or an antenna on the circuit board and may adopt a conventional component. The battery 24 is connected to the wireless signal encoding and transmitting circuit 22 and supply power to the wireless signal encoding and transmitting circuit 22.

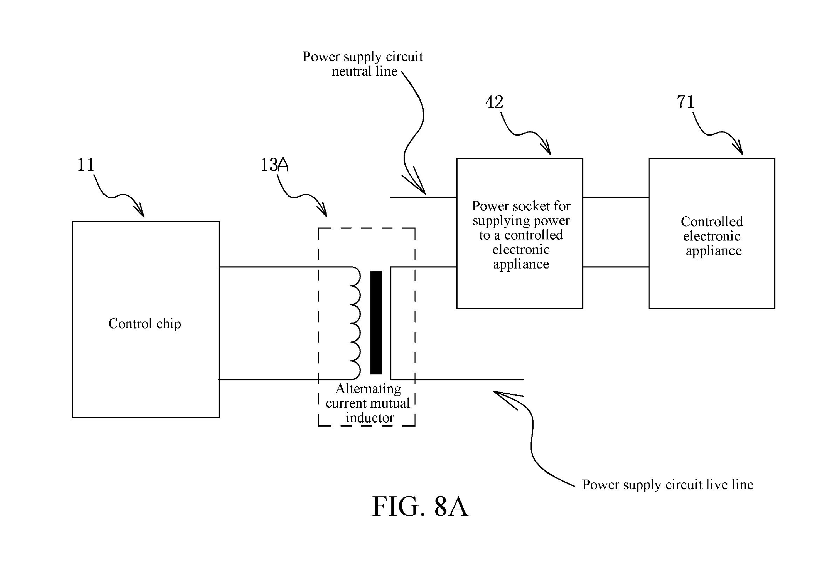

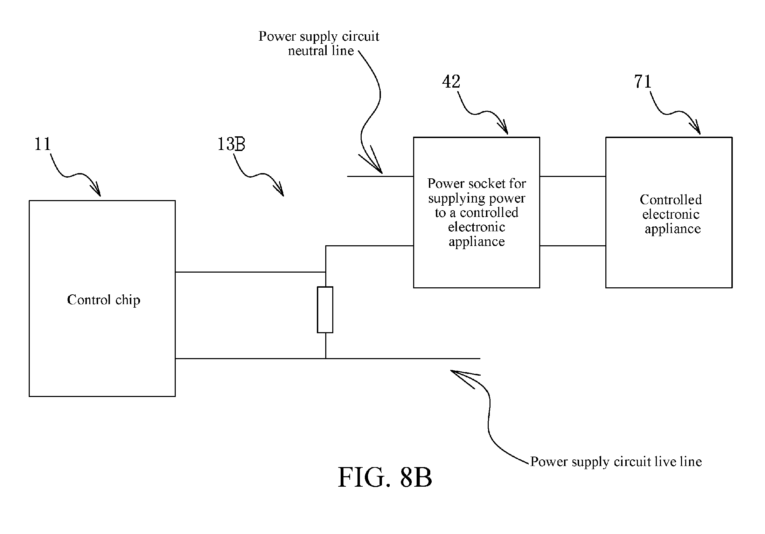

The control unit 10 includes a control chip 11, a memory 12, a controlled electronic appliance power consumption current sensor 13, a setting and manual switch button 14 and a setting and work status indicator lamp 15. The memory 12 is connected to the control chip 11 and used for storing a standby status current value of the controlled electronic appliance which is written and used by the control chip 11 and can be saved for a long time after power cutoff. The controlled electronic appliance power consumption current sensor 13 is connected to the control chip 11 and a live wire in the power socket for supplying power to a controlled electronic appliance 42 to detect a power consumption current value of the controlled electronic appliance and transfer the data to the control chip 11, which may be an alternating current mutual inductor 13A or a resistor 13B serially connected in a power supply circuit of the controlled electronic appliance (referring to FIG. 8A and FIG. 8B). The setting and manual switch button 14 is connected to the control chip 11 and used for setting initial installation and perform manual switch. The setting and work status indicator lamp 15 is connected to the control chip 11. Light red is used for indicating that the power source is turned on. Light blue is used for indicating that the device is in an initial setting status. The control chip 11, the non-volatile memory 12, the controlled electronic appliance power consumption current sensor 13, the setting and manual switch button 14 and the setting and work status indicator lamp 15 may all adopt conventional components.

The wireless signal receiving unit 30 includes a wireless signal receiving antenna 31, a wireless signal amplification and detection circuit 32 and a wireless signal decoding circuit 33. The wireless signal receiving antenna 31 is used for receiving a wireless power-on signal and may be an external antenna or an antenna on the circuit board, which may adopt a conventional component and may be connected to the wireless signal amplification and detection circuit 32. The wireless signal amplification and detection circuit 32 is used for perform amplification and detection on the received wireless power-on signal and transferring the amplified and detected wireless power-on signal to the connected wireless signal decoding circuit 33. The wireless signal amplification and detection circuit 32 may adopt a conventional wireless signal amplification and detection circuit. The components may all adopt conventional components. The wireless signal decoding circuit 33 decodes the signal transferred from the wireless signal amplification and detection circuit 32 and transfers the decoded signal to the connected control chip 11. The wireless signal decoding circuit 33 may adopt a conventional wireless signal decoding circuit. The components may all adopt conventional components.

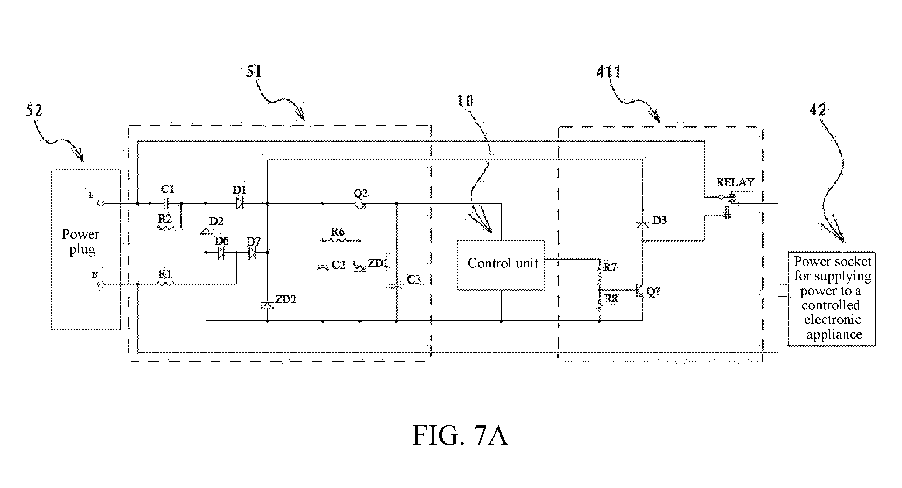

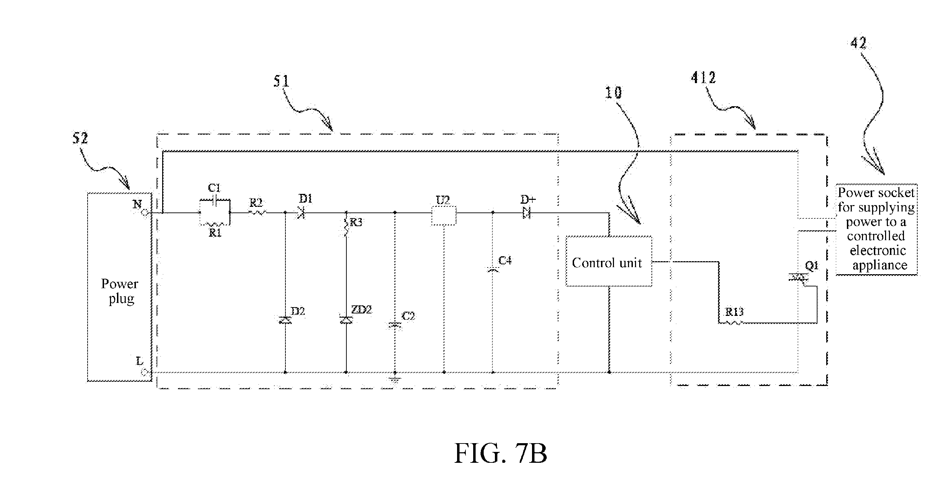

The controlled electronic appliance power supply switch unit 40 includes a controlled electronic appliance power supply switch 41 and a power socket for supplying power to a controlled electronic appliance 42. The controlled electronic appliance power supply switch 41 is connected to the control chip 11. The control chip controls to turn on or turned off the power supply to the controlled electronic appliance. The controlled electronic appliance power supply switch 41 is connected to the power supply unit 50 to acquire direct current power supply from the power supply unit 50 to drive the switch component relay 4111 or controlled silicon 4121. The controlled electronic appliance power supply switch 41 is connected to a power plug 52 connected to the external power source 72 and is connected to the power socket for supplying power to a controlled electronic appliance 42, so as to turn on or turned off the power supply of the controlled electronic appliance. The controlled electronic appliance power supply switch 41 may be a universal relay switch circuit 411 (referring to FIG. 7A) or a silicon controlled switch circuit 412 (referring to FIG. 7B), the component thereof may adopt a conventional component. The power socket for supplying power to a controlled electronic appliance 42 is connected to the controlled electronic appliance power supply switch 41 and is used for plugging a power input end (power plug) 73 of the controlled electronic appliance 71 to realize the power supply to the controlled electronic appliance, which is a standard power supply socket in an area where the device is used.

The power supply unit 50 includes a direct current power supply circuit 51 and a power plug 52 connected to the external power source 72. The direct current power supply circuit 51 is connected to the control unit 10 and the controlled electronic appliance power supply switch unit 40 and performs voltage drop, rectification, filtering and voltage stabilization processing on the external power source to provide direct current power supply to all units in the device, which may adopt a conventional direct current power supply circuit and a conventional component. The power plug 52 is connected to the power supply unit 50 and the controlled electronic appliance power supply switch unit 40 and is connected to an external power source through being plugged in the external power source socket 72, which is a standard power supply plug in an area where the device is used.

Although the present invention is disclosed through the above embodiments, the scope of the present invention is not limited thereto. The above means may be replaced by similar or equivalent elements well known to person skilled in the art without departing from the concept of the present invention.

## Claims

1. A device for eliminating standby power consumption of an electronic appliance with a system capable of automatic power-off, comprising:
a power-on signal wireless transmitting unit (20);
a control unit (10);
a wireless signal receiving unit (30), electrically connected to the control unit (10); and,
a controlled electronic appliance power supply switch unit (40), electrically connected to the control unit (10), a power supply unit (50) and a power input end of a controlled electronic appliance (71).

2. The device for eliminating standby power consumption of an electronic appliance with a system capable of automatic power-off according to claim 1, wherein the power-on signal wireless transmitting unit (20) comprises a power-on signal wireless transmitting unit housing (25) and a flexible button (21), a wireless signal encoding and transmitting circuit (22), a wireless signal transmit antenna (23) and a transmitting unit power source (24) are disposed inside the power-on signal wireless transmitting unit housing (25); and the wireless signal encoding and transmitting circuit (22) is electrically connected to the wireless signal transmit antenna (23) and a battery (24).

3. The device for eliminating standby power consumption of an electronic appliance with a system capable of automatic power-off according to claim 1, wherein the control unit (10) comprises a control chip (11), a memory (12) used for storing a standby status current value of the controlled electronic appliance which is written and used by the control chip (11) and capable of saving the standby status current value for a long time after power cutoff, a controlled electronic appliance power consumption current sensor (13) used for detecting a power consumption current of the controlled electronic appliance, a setting and manual power-on button (14) and a setting and work status indicator lamp (15); the memory (12), the controlled electronic appliance power consumption current sensor (13), the setting and manual power-on button (14) and the setting and work status indicator lamp (15) are all electrically connected to the control chip (11); and the controlled electronic appliance power consumption current sensor (13) is further electrically connected to the controlled electronic appliance power supply switch unit (40).

4. The device for eliminating standby power consumption of an electronic appliance with a system capable of automatic power-off according to claim 1, wherein the wireless signal receiving unit (30) comprises a wireless signal receiving antenna (31), a wireless signal amplification and detection circuit (32) and a wireless signal decoding circuit (33); the wireless signal receiving antenna (31) is electrically connected to the wireless signal amplification and detection circuit (32); the wireless signal amplification and detection circuit (32) is electrically connected to the wireless signal decoding circuit (33); and the wireless signal decoding circuit (33) is electrically connected to the control chip (11) of the control unit (10) and transfers a received wireless power-on signal to the control chip (11).

5. The device for eliminating standby power consumption of an electronic appliance with a system capable of automatic power-off according to claim 1, wherein the controlled electronic appliance power supply switch unit (40) comprises a controlled electronic appliance power supply switch (41) and a power socket for supplying power to a controlled electronic appliance (42); and the controlled electronic appliance power supply switch unit (40) is electrically connected to the control unit (10) and the power supply unit (50), and is electrically connected to a power input end (73) of the controlled electronic appliance (71) through the power socket for supplying power to a controlled electronic appliance (42) connected thereto.

6. The device for eliminating standby power consumption of an electronic appliance with a system capable of automatic power-off according to claim 1, wherein the power supply unit (50) performs voltage drop, rectification, filtering and voltage stabilization processing on the external power source to provide direct current power supply to all units of the device; the power supply unit comprises a direct current power supply circuit (51) and a power plug (52) electrically connected to an external power source (72); and the power supply unit (50) is electrically connected to the control unit (10) and the controlled electronic appliance power supply switch unit (40), and is electrically connected to the external power source (72) through the power plug (52) electrically connected to.

7. The device for eliminating standby power consumption of an electronic appliance with a system capable of automatic power-off according to claim 2, wherein the flexible button (21) has a joint structure capable of being adhered or clamped to a surface of a switch button of the controlled electronic appliance (71).

8. The device for eliminating standby power consumption of an electronic appliance with a system capable of automatic power-off according to claim 3, wherein the controlled electronic appliance power consumption current sensor (13) is an alternating current mutual inductor (13A) or a resistor (13B) serially connected in a power supply circuit of the controlled electronic appliance.

9. The device for eliminating standby power consumption of an electronic appliance with a system capable of automatic power-off according to claim 5, wherein the power supply switch (41) is a relay switch circuit (411) or a silicon controlled switch circuit (412) controlled by the control unit (10).
